# FASCICULE DE BREVET EUROPEEN

(11) **EP 1 544 035 B1**
(45) Date de publication et mention de la délivrance du brevet: **23.08.2006**
(21) Numéro de dépôt: 04292829.1
(22) Date de dépôt: 30.11.2004
(51) Int. Cl.: B60Q 1/04, B62D 25/08

(54) **Ensemble de partie avant de véhicule automobile comportant des moyens perfectionnés de fixation et d'ajustement en position, et véhicule automobile pourvu d'un tel ensemble**
Vorderer Karosserieaufbau eines Kraftfahrzeuges mit verbesserten Befestigungs- und Lagejustiermitteln, und Kraftfahrzeug ausgestattet mit einem solchen Aufbau
Vehicle body front portion assembly with improved fastening and position adjusting means, and vehicle provided with such an assembly

(30) Priorité: 19.12.2003 FR 0315097
(43) Date de publication de la demande: 22.06.2005
(73) Titulaire: Faurecia Bloc Avant, 92000 Nanterre (FR)
(72) Inventeur: Lazzeroni, Eric, 73642 Welzhein (DE)
(74) Mandataire: Domenego, Bertrand

(56) Documents cités:
- EP-A- 1 232 932
- DE-A- 19 949 467
- FR-A- 2 783 797
- US-B1- 6 386 624

## Description

La présente invention concerne un ensemble de partie avant de véhicule automobile, comprenant
- une face avant rigide, et, de chaque côté latéral de ladite face avant :
   - une partie avant de structure,
   - une partie avant d'aile,
   - une poutre flexible faisant saillie transversalement de ladite face avant, ladite poutre ayant une première extrémité fixée à ladite face avant, et une deuxième extrémité reliée à ladite partie avant d'aile, et
   - un bloc optique fixé sur ladite poutre.

Un tel ensemble est par exemple décrit dans le document EP-A-1 232 932.

La structure décrite dans ce document permet un positionnement automatique et permanent des contours visibles des blocs optiques par rapport aux extrémités d'ailes correspondantes et à la peau de pare-chocs. Dans le même temps, cette structure assure un positionnement relatif précis des extrémités d'ailes et de la peau de pare-chocs.

Sur certains véhicules, le choix est fait de réaliser les parties avant d'aile en matière plastique plutôt qu'en tôle métallique. Ce choix technologique, qui présente un certain nombre d'avantages, a néanmoins pour conséquence que les parties avant d'aile sont sujettes à des déformations relativement importantes au cours de la vie du véhicule. Dans certaines directions privilégiées, telle que la direction longitudinale de l'aile et du véhicule, ces déformations peuvent être de l'ordre de quelques millimètres, alors qu'elles ne sont pas significatives dans le cas d'ailes métalliques.

De telles déformations, par l'intermédiaire de la liaison existant entre la partie avant d'aile et la poutre correspondante, sont susceptibles d'engendrer, après montage de l'ensemble de partie avant du véhicule, et au cours de la vie de ce dernier, des déformations sensibles de la poutre, et ainsi de provoquer des dérèglements non maîtrisables de l'orientation et de la position du bloc optique supporté par la poutre.

L'invention a pour objet de remédier à cet inconvénient, et de proposer un ensemble de partie avant de véhicule automobile du type ci-dessus, qui soit compatible avec l'utilisation d'une partie avant d'aile non métallique, en particulier en matière plastique, et qui préserve à cet effet les réglages des blocs optiques des effets des déformations de l'aile.

Ce but est atteint par l'invention, selon laquelle l'ensemble de partie avant est du type décrit précédemment, et comporte en outre
- une pièce de centrage et de guidage, fixée sur la partie avant de structure, dans une position qui peut être réglée, lors du montage, selon un premier, un deuxième, et un troisième axes sensiblement orthogonaux,
- des moyens de fixation et de centrage de la deuxième extrémité de la poutre sur ladite pièce, et
- des moyens de guidage de la partie avant d'aile sur ladite pièce, assurant une liaison coulissante selon le troisième axe,
de sorte qu'une liaison avec possibilité de coulissement selon ledit troisième axe est assurée entre la deuxième extrémité de la poutre et la partie avant d'aile, après montage, par l'intermédiaire de ladite pièce de centrage et de guidage, afin de permettre des mouvements relatifs d'ajustement et d'absorber des déformations de ladite partie avant d'aile.

Selon d'autres caractéristiques, optionnelles, de l'invention, prises seules ou suivant toutes les combinaisons techniquement envisageables :
- sur la pièce de centrage et de guidage sont formés d'une part un organe de centrage qui coopère avec un organe complémentaire de centrage solidaire de la deuxième extrémité de la poutre, et d'autre part un organe de guidage qui coopère avec un organe complémentaire de guidage solidaire de la partie avant d'aile ;
- l'ensemble comporte un dispositif de centrage et de guidage, comprenant d'une part ladite pièce de centrage et de guidage, et d'autre part une pièce de support, fixée sur la partie avant de structure dans une position qui peut être réglée selon le deuxième axe et le troisième axe, et sur laquelle est fixée la pièce de centrage et de guidage, dans une position qui peut être réglée, lors du montage, selon le premier axe ;
- la pièce de support est fixée sur la partie avant de structure au moyen d'une vis de serrage engagée dans un trou carré, s'étendant selon le deuxième axe et le troisième axe;
- la pièce de centrage et de guidage est fixée sur la pièce de support au moyen d'une vis de serrage engagée dans un trou oblong, allongé selon le premier axe ;
- l'organe de guidage et l'organe complémentaire de guidage sont pourvus de formes complémentaires d'indexage définissant une position relative nominale de la partie avant d'aile et de la deuxième extrémité de la poutre, à partir de laquelle s'effectuent les mouvements d'ajustement ;
- l'organe de centrage et l'organe complémentaire de centrage ont des formes complémentaires tronconiques, prévues pour s'emboîter coaxialement l'une dans l'autre, selon un axe commun correspondant sensiblement au troisième axe;
- l'organe de guidage est une glissière, et l'organe complémentaire de guidage est un rail formé en saillie à partir d'un rebord de la partie avant d'aile ;
- l'organe complémentaire de guidage est formé d'une pièce avec une pièce de renfort de l'aile, qui est rapportée et fixée rigidement sur ledit rebord d'aile ;
- le troisième axe est tel qu'il correspond sensiblement à la direction longitudinale du véhicule, lorsque l'ensemble est monté sur le véhicule ; et
- la partie avant d'aile est réalisée en matière plastique.

L'invention vise également un véhicule comprenant un ensemble de partie avant tel que décrit précédemment.

Un mode de réalisation de l'invention va maintenant être décrit plus en détail en se référant aux dessins annexés, sur lesquels :
- les Figures 1 et 2 sont des vues éclatées en perspective avant, suivant deux directions différentes, d'un ensemble de partie avant de véhicule conforme à l'invention et d'une partie de capot du véhicule ;
- la Figure 3 est une vue schématique éclatée de dessus, à plus grande échelle, d'un détail des Figures, 1 et 2, correspondant à la région de liaison entre la poutre, l'aile, et la partie de structure ;
- la Figure 4 est une vue schématique éclatée de côté correspondant à la Figure 3 ;
- la Figure 5 est une vue partielle analogue à la Figure 3, en configuration assemblée des éléments représentés ;
- les Figures 6 et 7 sont des vues en perspective, respectivement avant et arrière, du dispositif de centrage et de guidage réalisant la liaison entre la poutre et l'aile, et d'une pièce de renfort de la partie avant d'aile ;
- la Figure 8 est une vue, analogue à la Figure 6, d'une partie du dispositif de centrage et de guidage ; et
- la Figure 9 est une vue, analogue à la Figure 7, de la pièce de renfort de la partie d'aile, seule.

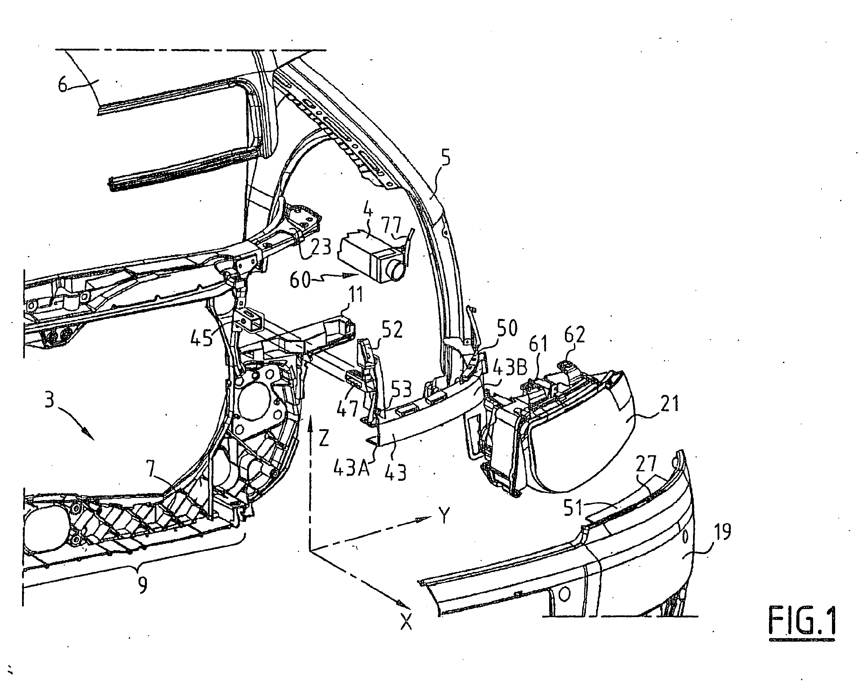

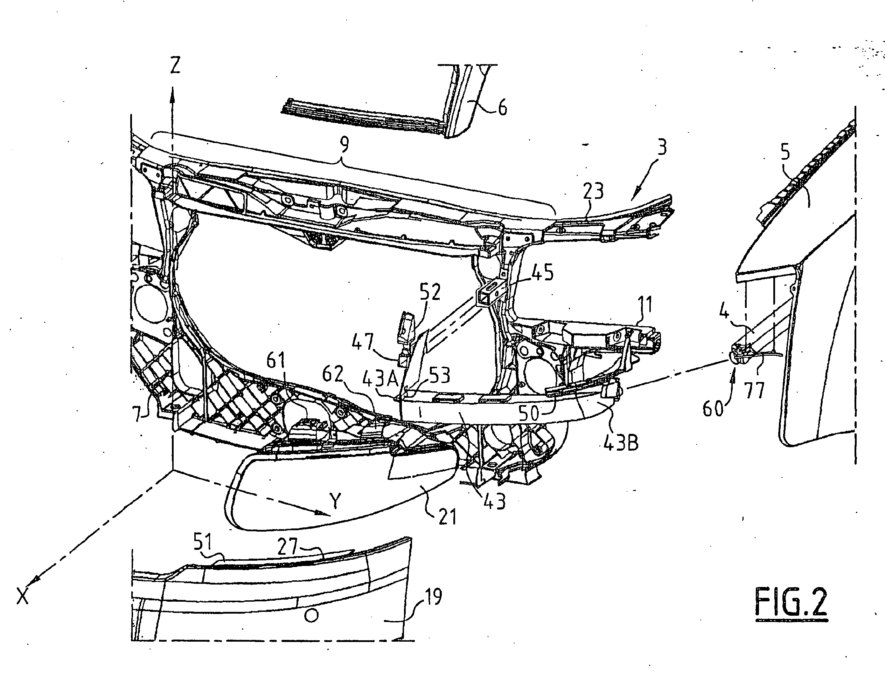

Sur les Figures 1 et 2, on a_représenté un ensemble de partie avant d'un véhicule automobile, comprenant un bloc-avant 3 (représenté partiellement), une partie avant de structure 4, et une extrémité avant 5 d'une aile de carrosserie. On a également représenté une extrémité avant 6 du capot du véhicule.

On a orienté ces Figures 1 et 2, ainsi que les Figures suivantes, suivant trois axes X, Y, Z qui correspondent à l'orientation usuelle du véhicule, à savoir respectivement l'axe longitudinal X orienté dans la direction de marche avant, l'axe transversal Y orienté de droite à gauche, du point de vue du conducteur, et l'axe vertical Z orienté de bas en haut. Tous les termes utilisés dans la suite de la description, pouvant indiquer un sens ou un positionnement, doivent être compris en référence à ce système d'axes.

La partie avant de véhicule représentée sur les Figures 1 et 2 est symétrique ou quasi-symétrique par rapport à un plan médian vertical du véhicule. Pour plus de clarté, on n'a représenté sur ces Figures et on ne décrira que la portion située du côté gauche du véhicule.

Le bloc-avant 3 du véhicule comporte une structure essentiellement rigide constituée par une face avant 7, laquelle présente une partie centrale 9 et une partie latérale 11.

Le bloc-avant 3 comporte en outre une peau de pare-chocs 19, réalisée par exemple d'une pièce de matériau plastique, qui est disposée sur toute la largeur de la face avant 7, en dépassant latéralement des parties latérales 11 de la face avant, et en s'appliquant sur un bord de l'extrémité avant d'aile 5, en coïncidence avec celui-ci.

Le bloc avant 3 comporte de plus, de chaque côté latéral, un bloc optique 21 monté sur la face avant dans des formes complémentaires, sous un bord supérieur 23 de cette dernière, et au-dessus d'un bord supérieur 27 de la peau de pare-chocs 19.

Le bloc avant 3 comporte par ailleurs, de chaque côté latéral, une poutre galbée 43 s'étendant essentiellement latéralement dans la direction de la peau de pare-chocs 19. Cette poutre galbée 43 a une première extrémité 43A fixée à la partie centrale 9 de la face avant, par l'intermédiaire de moyens de blocage 45 complémentaires, et une deuxième extrémité 43B reliée d'une part à la partie avant d'aile 5, et d'autre part à la partie de structure 4.

La partie avant de structure 4 est, par exemple, constituée d'une section de longeron ou d'une paroi métallique de la caisse du véhicule. Cette partie de structure peut être de tout autre type adapté, c'est-à-dire fixe par rapport au châssis, et sensiblement indéformable.

La poutre 43 est flexible dans la mesure où, lors de son montage sur le véhicule, et après fixation de l'une de ses extrémités 43A, 43B sur la face avant 7 ou sur la partie avant de structure 4, l'autre extrémité est susceptible de débattement par déformation élastique dans une étape ultérieure de montage, de façon à compenser les jeux et respecter les affleurements entre les différentes pièces de la partie avant.

En particulier; les rigidités à la flexion de la face avant 7 et de la partie de structure 4 sont très supérieures à celle de la poutre 43.

Sur une partie supérieure de la poutre 43 est formée une gouttière 50 qui s'étend transversalement, suivant la direction générale de la poutre 43. Cette gouttière 50 reçoit un volet 51 formé en saillie du bord supérieur 27 de la peau de pare-chocs 19, de façon à réaliser un accrochage de la peau de pare-chocs 19 sur la poutre 43, avec possibilité de mouvements relatifs d'ajustement suivant la direction générale de la poutre 43.

La poutre 43 est adaptée pour supporter le bloc optique 21 respectif. A cet effet, la poutre 43 est pourvue de faces planes verticales d'appui 52, 53, tournées vers la deuxième extrémité 43B, ou extrémité extérieure, de la poutre 43, et destinées à coopérer avec des bossages correspondants (non représentés) en saillie vers l'extérieur du bloc optique 21, de façon que ce dernier soit positionné avec précision par rapport à la poutre 43 selon la direction Y. La fixation rigide du bloc optique 21 sur la poutre 23 est assurée par des moyens de blocage (non représentés) tels que des paires vis/écrous.

On notera que les moyens 45 de blocage de la première extrémité 43A de la poutre sur la partie centrale 9 de la face avant, comportent, dans l'exemple représenté, deux manchons creux complémentaires de section rectangulaire, et des organes de fixation rigide (non représentés), tels que des rivets ou des vis, permettant de solidariser les deux manchons dans une position emboîtée coaxialement.

Dans l'exemple représenté, l'aile, dont on a représenté la partie avant 5 sur les Figures, est réalisée en matériau non métallique, et plus précisément en matière plastique.

On distingue également, sur les Figures 1 et 2, un dispositif 60 de centrage et de guidage, qui est fixé sur la partie de structure 4, et qui fait partie de l'ensemble objet de l'invention. Ce dispositif 60 assure, comme cela sera détaillé ultérieurement, les liaisons entre l'aile 5, la poutre 43, et la partie de structure 4.

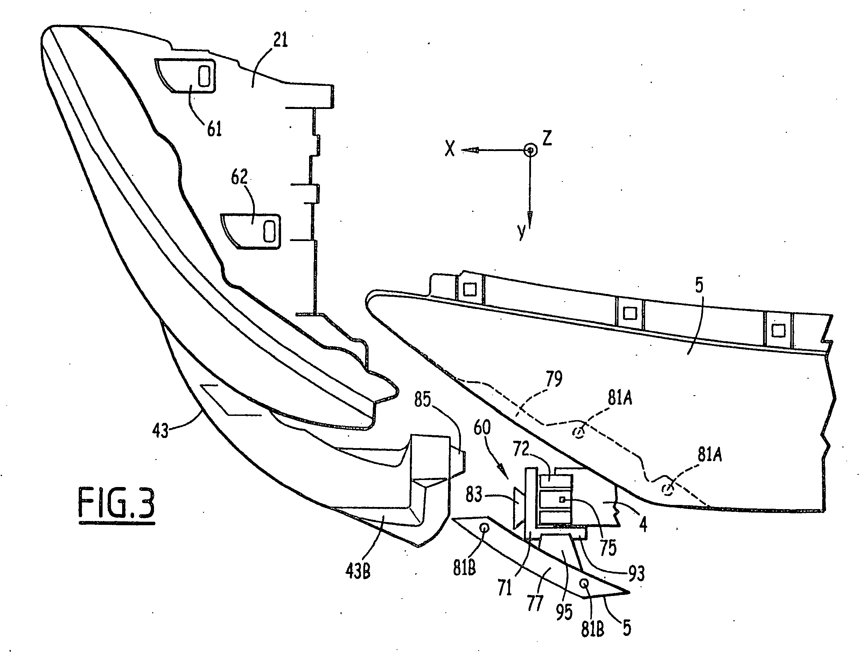

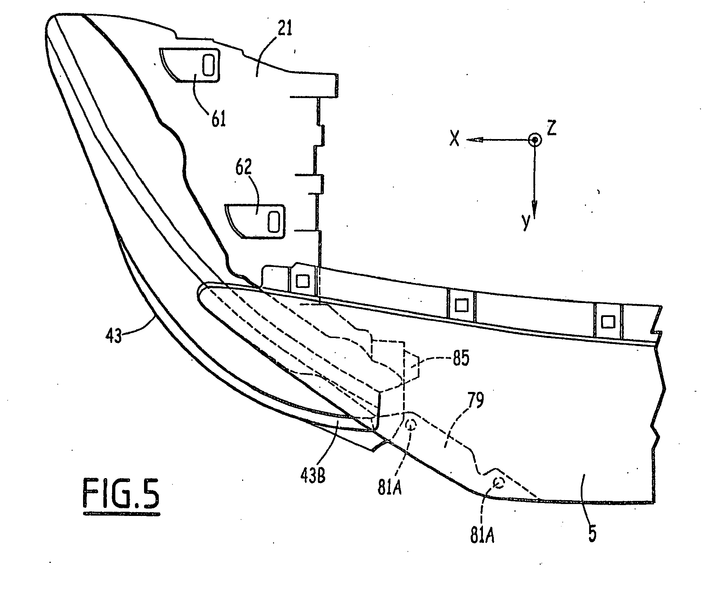

En référence aux Figures 3 à 5, on va à présent décrire plus précisément les liaisons entre l'aile 5, la poutre 43, et la partie de structure 4.

Par souci de clarté; on a représenté sur ces Figures, outre la partie de structure 4, l'aile 5, et la poutre 43, le bloc optique 21, dont on peut voir qu'il est formé avec deux pattes 61, 62 d'attache sur la face avant 7. Ces pattes d'attache 61, 62 sont prévues sur une face supérieure du bloc optique 21, et présentent chacune un trou oblong autorisant un ajustement en position et en orientation du bloc optique 21 sur la face avant 7.

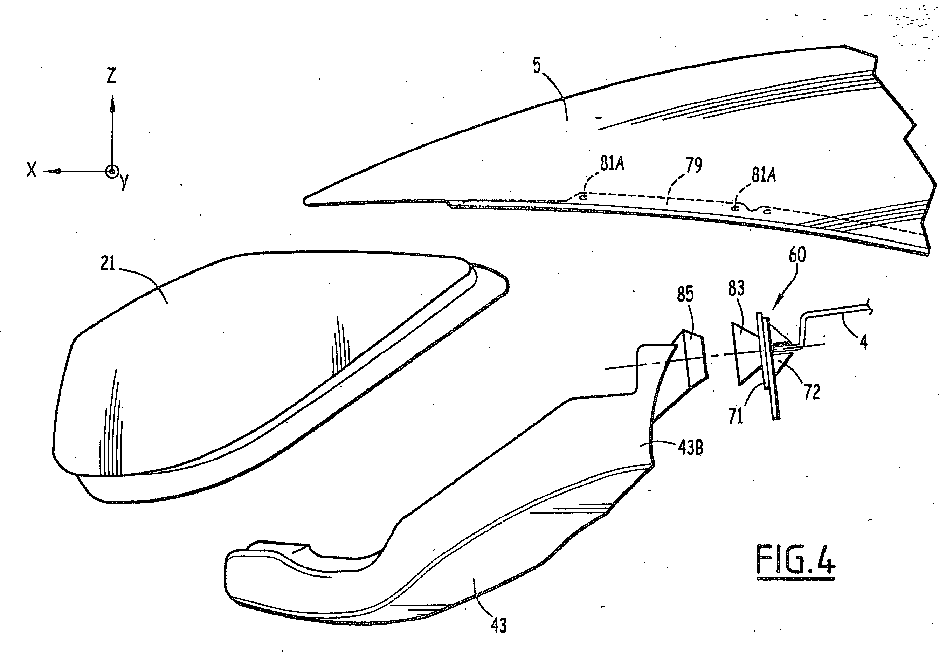

Comme cela a été schématiquement représenté sur les Figures 3 et 4, le dispositif de centrage et de guidage 60 est constitué essentiellement de deux pièces 71, 72.

La première 71 est une pièce de centrage et de guidage prévue pour coopérer avec des parties complémentaires, respectivement de la poutre 43 et de l'aile 5.

La deuxième 72 est une pièce de support assurant la fixation rigide du dispositif 60 sur la partie de structure 4.

Cette fixation est assurée, dans l'exemple représenté, par une vis engagée dans un trou carré 75 de la pièce de support 72 et/ou de la pièce de structure 4. Le trou carré 75 s'étend suivant les axes X, Y, de sorte que la fixation autorise un ajustement en position du dispositif 60 sur la pièce de structure 4 suivant ces axes X, Y.

Comme représenté schématiquement sur la Figure 3, la partie d'aile 5 comprend une pièce de renfort 77, solidaire d'un rebord d'aile 79 rabattu vers l'intérieur. Dans l'exemple représenté, la pièce de renfort 77 est rapportée et fixée rigidement sur le rebord d'aile 79, en deux points de fixation 81. Ces points de fixations 81 sont par exemple définis d'une part par des trous taraudés 81B ménagés dans des cheminées verticales de la pièce de renfort 77, et d'autre part par des trous lisses 81A correspondants ménagés dans le rebord 79.

On a également illustré sur la Figure 3, de façon schématique, que la pièce de centrage et de guidage 71 est formée d'une part avec un organe de centrage 83, prévu pour coopérer avec un organe de centrage complémentaire 85, formé en saillie de l'extrémité 43B de la poutre, et d'autre part avec un organe de guidage 93, prévu pour coopérer avec un organe complémentaire de guidage 95, formé en saillie de la pièce de renfort 77.

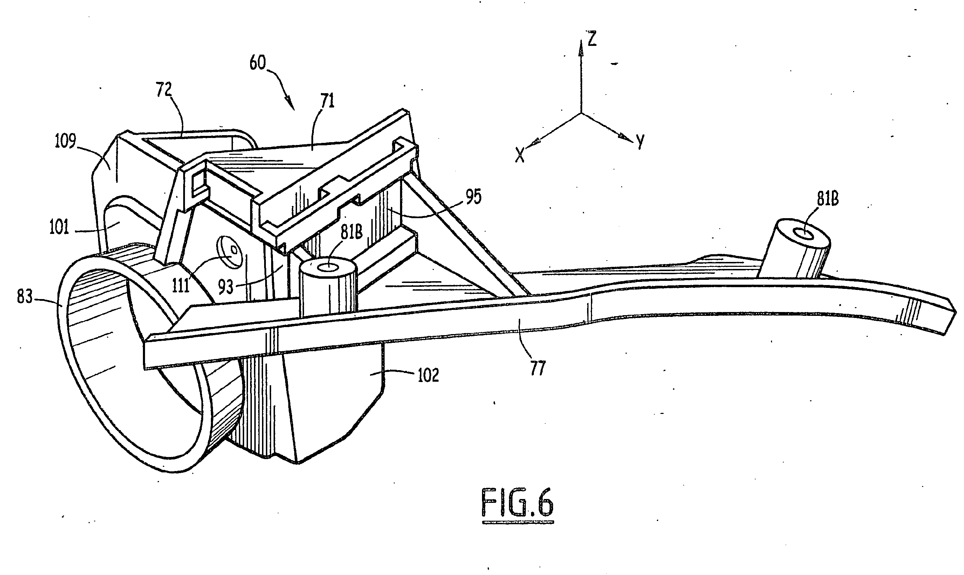

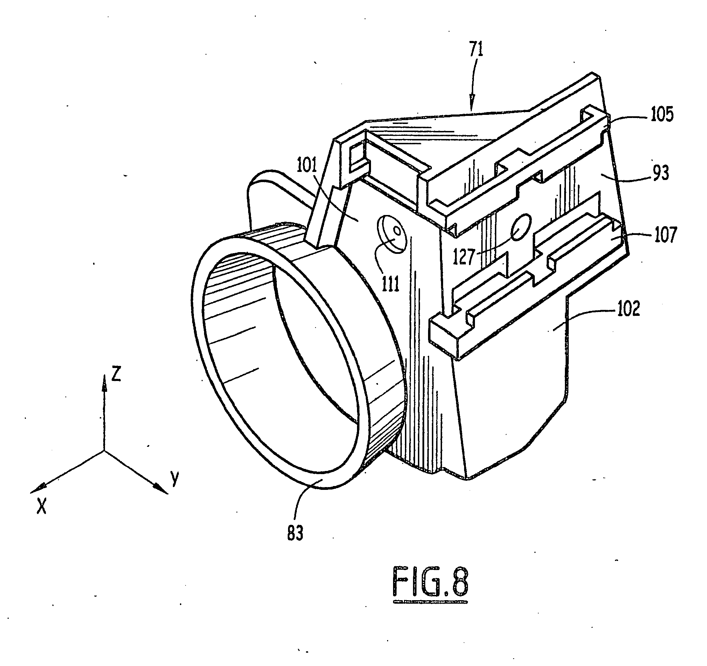

L'organe de centrage 83, comme cela sera mieux vu par la suite sur les Figures 6 et 8, a une forme tronconique creuse, tandis que l'organe 85 a une forme tronconique mâle complémentaire. Les deux organes 83, 85 sont agencés respectivement sur le dispositif 60 et sur la poutre 43, de sorte à pouvoir s'emboîter coaxialement selon la direction de l'axe X, lors du montage de l'ensemble. A cet effet, l'ouverture évasée de l'organe tronconique 83 est tournée vers l'avant, tandis que l'extrémité libre définissant la base de plus petit diamètre de l'organe tronconique complémentaire 85 est tournée vers l'arrière.

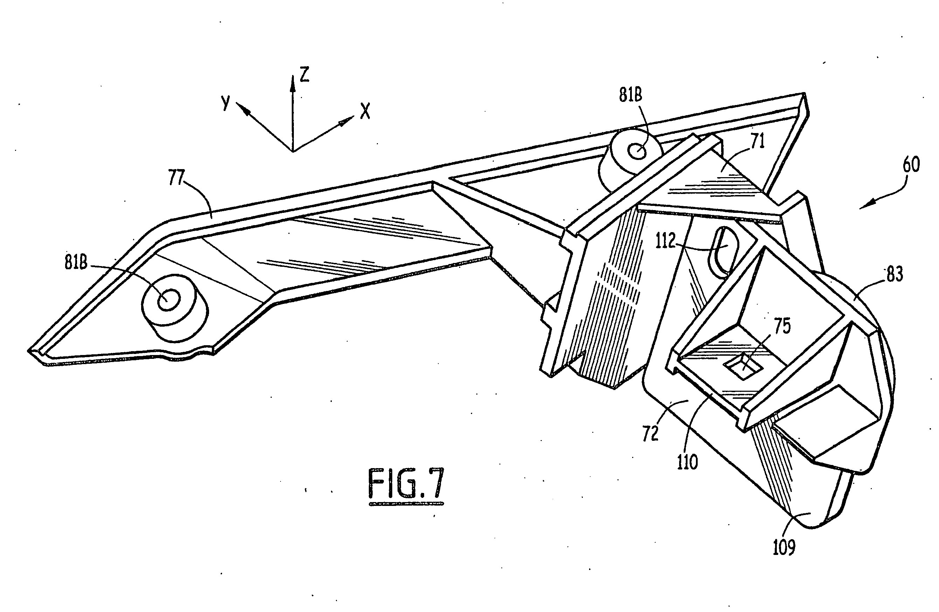

On se réfère à présent plus particulièrement aux Figures 6 à 9, qui illustrent avec plus de détails la liaison entre l'aile 5, par l'intermédiaire de sa pièce de renfort 77, et le dispositif de centrage et de guidage 60. Ces Figures permettent également de représenter avec plus de détails la structure du dispositif 60 et de la pièce de renfort 77.

On notera tout d'abord que la pièce de centrage et de guidage 71 a une forme générale en équerre, et comprend essentiellement deux parois orthogonales, dont l'une 101 supporte l'organe tronconique de centrage 83 formé en saillie de cette dernière, et l'autre 102 supporte l'organe de guidage 93.

L'organe de guidage 93 est formé comme une glissière s'étendant sensiblement suivant l'axe X, la glissière étant définie par deux rebords parallèles supérieur et inférieur 105, 107, formés en saillie de la paroi 102, et s'étendant sensiblement suivant l'axe X.

La pièce de support 72 est formée essentiellement comme une plaquette 109 fixée sur la pièce 71, en s'appliquant avec appui plan derrière la paroi 101.

En saillie vers l'arrière de la plaquette 109, est formée une patte d'attache 110, dans laquelle est agencé le trou carré 75 permettant de réaliser la fixation ajustable en X et Y de la pièce 72, et ainsi du dispositif 60, sur la pièce de structure 4.

Un trou circulaire 111 et un trou oblong 112, allongé suivant l'axe Z, sont formés de façon correspondante respectivement dans la paroi 101 et dans la plaquette 109. Ces trous 111, 112 sont prévus pour recevoir conjointement à engagement un organe de serrage, tel qu'une vis. On comprend que l'on réalise ainsi une fixation rigide des pièces 71 et 72, qui peut être ajustée en position relative selon l'axe Z.

A la lumière de ce qui précède, on comprend que la pièce de centrage et de guidage 71 peut être fixée sur la partie de structure 4, par l'intermédiaire de la pièce de support 72, avec possibilité d'ajustement suivant les trois axes orthogonaux X, Y, Z.

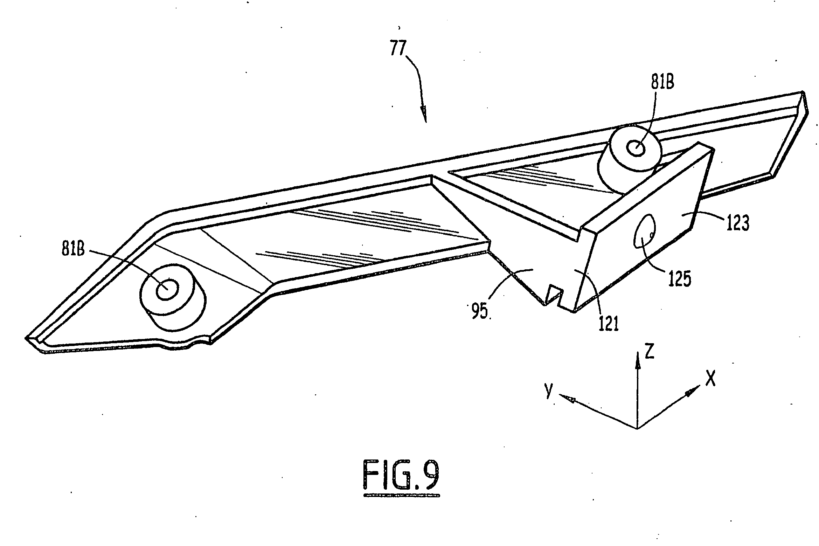

En se référant plus particulièrement à la Figure 9, il est possible de constater que l'organe 95, complémentaire de la glissière 93, est formé par un rail en saillie de la pièce de renfort 77. La section d'extrémité libre du rail a la forme générale d'une plaque rectangulaire 121, prévue pour s'engager avec liberté de coulissement dans la glissière 93. La face libre 123 de la plaque 121, qui est tournée vers le fond de la glissière, présente un dôme hémisphérique 125 central en relief. De façon correspondante, la paroi de fond de la glissière 93 présente un évidement complémentaire 127, prévu pour recevoir le dôme 125, et ainsi définir un cran d'arrêt associé à une position de référence, c'est-à-dire une position relative nominale de montage, de la partie avant d'aile 5 et de l'extrémité 43B de la poutre. En d'autres termes, le dôme 125 et l'évidement complémentaire 127 constituent des formes complémentaires d'indexage pour le montage de l'ensemble.

A partir de cette position nominale, la pièce de renfort 77, et solidairement toute la partie avant d'aile 5, peut s'ajuster en position par rapport à la pièce de structure 4, au dispositif 60, et ainsi par rapport à la poutre 43, lors des déformations de l'aile 5, par des mouvements d'ajustement du rail 95 dans la glissière 93 suivant la direction longitudinale X.

Il est prévu que ces mouvements d'ajustement puissent avoir une amplitude de quelques millimètres (2 ou 3 par exemple), de part et d'autre de la position de référence.

Grâce aux moyens de fixation et de centrage définis par les organes tronconiques complémentaires 83, 85, on réalise un positionnement précis et stable de l'extrémité 43B de la poutre, par rapport à la pièce de structure 4 et à la partie avant d'aile 5, ce positionnement étant ajustable en X, en Y et en Z par rapport à la pièce fixe 4, lors du montage.

Grâce aux moyens de guidage de la partie avant d'aile 5 par rapport à la pièce fixe 4, constitués de la glissière 93 et du rail complémentaire 95, on assure une liaison coulissante auto-ajustable en X, permettant des mouvements relatifs d'ajustement, après le montage de l'aile sur le véhicule, de façon à compenser les déformations de l'aile, sans affecter le réglage de la position de la poutre, ni par conséquent le réglage en position et en orientation du bloc optique 21 correspondant.

L'ensemble de partie avant de véhicule qui vient d'être décrit, et en particulier le dispositif de centrage et de guidage, permet d'obtenir des possibilités d'ajustement au montage selon les trois axes, par des pièces de fixation distinctes, et une possibilité d'ajustement automatique après montage selon l'un des trois axes, prévu pour être l'axe privilégié de déformation de l'aile.

## Revendications

1. Ensemble de partie avant de véhicule automobile, comprenant
- une face avant (7) rigide, et, de chaque côté latéral de ladite face avant :
- une partie avant de structure (4),
- une partie avant d'aile (5),
- une poutre flexible (43) faisant saillie transversalement de ladite face avant (7), ladite poutre ayant une première extrémité (43A) fixée à ladite partie face avant (7), et une deuxième extrémité (43B) reliée à ladite partie avant d'aile (5), et
- un bloc optique (21) fixé sur ladite poutre (43),
**caractérisée en ce qu'**il comporte en outre
- une pièce de centrage et de guidage (71), fixée sur la partie avant de structure (4), dans une position qui peut être réglée, lors du montage, selon un premier (Z), un deuxième (Y), et un troisième (X) axes sensiblement orthogonaux,
- des moyens (83, 85) de fixation et de centrage de la deuxième extrémité (43B) de la poutre sur ladite pièce (71), et
- des moyens (93, 95) de guidage de la partie avant d'aile (5) sur ladite pièce (71), assurant une liaison coulissante selon le troisième axe (X),
de sorte qu'une liaison avec possibilité de coulissement selon ledit troisième axe (X) est assurée entre la deuxième,extrémité (43B) de la poutre et la partie avant d'aile (5), après montage, par l'intermédiaire de ladite pièce de centrage et de guidage (71), afin de permettre des mouvements relatifs d'ajustement et d'absorber des déformations de ladite partie avant d'aile (5).

2. Ensemble suivant la revendication 1, **caractérisé en ce que** sur la pièce de centrage et de guidage (71), sont formés d'une part un organe de centrage (83) qui coopère avec un organe complémentaire de centrage (85) solidaire de la deuxième extrémité (43B) de la poutre, et d'autre part un organe de guidage (93) qui coopère avec un organe complémentaire de guidage (95) solidaire de la partie avant d'aile (5).

3. Ensemble suivant la revendication 2, **caractérisé en ce qu'**il comprend un dispositif de centrage et de guidage (60), comprenant d'une part ladite pièce de centrage et de guidage (71), et d'autre part une pièce de support (72), fixée sur la partie avant de structure (4) dans une position qui peut être réglée selon le deuxième axe (Y) et le troisième axe (X), et sur laquelle est fixée la pièce de centrage et de guidage (71), dans une position qui peut être réglée, lors du montage, selon le premier axe (Z).

4. Ensemble suivant la revendication 3, **caractérisé en ce que** la pièce de support (72) est fixée sur la partie avant de structure (4) au moyen d'une vis de serrage engagée dans un trou carré (75), s'étendant selon le deuxième axe (Y) et le troisième axe (X).

5. Ensemble suivant la revendication 3 ou 4, **caractérisé en ce que** la pièce de centrage et de guidage (71) est fixée sur la pièce de support (72) au moyen d'une vis de serrage engagée dans un trou oblong (112), allongé selon le premier axe (Z).

6. Ensemble suivant l'une quelconque des revendications 2 à 5, **caractérisé en ce que** l'organe de guidage (93) et l'organe complémentaire de guidage (95) sont pourvus de formes complémentaires d'indexage (125, 127) définissant une position relative nominale de la partie avant d'aile (5) et de la deuxième extrémité (43B) de la poutre, à partir de laquelle s'effectuent les mouvements d'ajustement.

7. Ensemble suivant l'une quelconque des revendications 2 à 6, **caractérisé en ce que** l'organe de centrage (83) et l'organe complémentaire de centrage (85) ont des formes complémentaires tronconiques, prévues pour s'emboîter coaxialement l'une dans l'autre, selon un axe commun correspondant sensiblement au troisième axe (X).

8. Ensemble suivant l'une quelconque des revendications 2 à 7, **caractérisé en ce que** l'organe de guidage (93) est une glissière, et l'organe complémentaire de guidage (95) est un rail formé en saillie à partir d'un rebord (79) de la partie avant d'aile (5).

9. Ensemble suivant la revendication 8, **caractérisé en ce que** l'organe complémentaire de guidage (95) est formé d'une pièce avec une pièce (77) de renfort de l'aile, qui est rapportée et fixée rigidement sur ledit rebord d'aile (79).

10. Ensemble suivant l'une quelconque des revendications 2 à 9, **caractérisé en ce que** le troisième axe (X) est tel qu'il correspond sensiblement à la direction longitudinale du véhicule, lorsque l'ensemble est monté sur le véhicule.

11. Ensemble suivant l'une quelconque des revendications 2 à 10, **caractérisé en ce que** la partie avant d'aile (5) est réalisée en matière plastique.

12. Véhicule automobile comprenant un ensemble de partie avant selon l'une quelconque des revendications 1 à 11.

## Claims

1. Automotive vehicle front part assembly, made up of
- a rigid front face (7) and, on each lateral side of the said front face:
- a structure front part (4),
- a wing front part (5),
- a flexible beam (43) transversely projecting from the aforementioned front face (7), with the said beam having a first end (43A) fixed to the aforementioned front part (7), and a second end (43B) linked to the wing front part (5), and
- an optical block (21) fixed to the said beam (43),
**characterised by** the fact that it includes in addition
- a centring and guiding component (71), fixed to the front structure part (4), in a position which can be adjusted during fitting in the direction of a first (Z), a second (Y) and a third axis (X) which are effectively orthogonal,
- means (83, 85) of fixing and centring the second end (43B) of the beam onto the said component (71), and
- means (93, 95) of guiding the wing front part (5) on the aforementioned component (71), to provide a sliding connection in the direction of the third axis (X),
so that a link, which may slide in the direction of the third axis (X), is provided between the second end (43B) of the beam and the wing front part (5), after fitting, through the use of the aforementioned centring and guiding component (71), in order to allow relative adjustment movements to be made and to take up deformation of the aforementioned wing front part (5).

2. Assembly as described in claim 1, **characterised by** the fact that on the centring and guiding component (71) there are formed, on the one hand, a centring element (83) which fits into a complementary centring element (85) which forms part of the second end (43B) of the beam, and on the other hand a guiding element (93) which fits into a complementary guiding element (95) which forms part of the wing front part (5).

3. Assembly as described in claim 2, **characterised by** the fact that it includes a centring and guiding device (60), which includes, on the one hand, the said centring and guiding component (71) and on the other hand a support component (72), fixed to the structure front part (4) in a position which may be adjusted in the direction of the second axis (Y) and the third axis (X), and to which is fitted the centring and guiding component (71), in a position which may be adjusted, during fitting, in the direction of the first axis (Z).

4. Assembly as described in claim 3, **characterised by** the fact that the support component (72) is fixed to the structure front part (4) using a locking bolt engaged in a square hole (75), extending in the direction of the second axis (Y) and the third axis (X).

5. Assembly as described in claim 3 or 4, **characterised by** the fact that the centring and guiding component (71) is fixed to the support component (72) by means of a locking bolt engaged in an oblong hole (112), elongated in the direction of the first axis (Z).

6. Assembly as described in any of claims 2 to 5 whatsoever, **characterised by** the fact that the guiding element (93) and the complementary guiding element (95) are provided with complementary indexing profiles (125, 127) which define a nominal relative position of the wing front part (5) with the second end (43B) of the beam, from which adjustment movements are made.

7. Assembly as described in any of claims 2 to 6 whatsoever, **characterised by** the fact that the centring element (83) and the complementary centring element (85) have complementary tapered shapes, designed to fit coaxially one into the other, in the direction of a common axis which effectively corresponds to the third axis (X).

8. Assembly as described in any of claims 2 to 7 whatsoever, **characterised by** the fact that the guiding element (93) is a slide and the complementary guiding element (95) is a rail formed on a projection from a lip (79) on the wing front part (5).

9. Assembly as described in claim 8, **characterised by** the fact that the complementary guiding element (95) is formed in one piece with a wing reinforcement component (77), which is attached and rigidly fixed to the aforementioned lip (79) of the wing.

10. Assembly as described in any of claims 2 to 9 whatsoever, **characterised by** the fact that the third axis (X) is such that it effectively corresponds to the longitudinal direction of the vehicle when the assembly is fitted to the vehicle.

11. Assembly as described in any of claims 2 to 10 whatsoever, **characterised by** the fact that the wing front part (5) is made of plastic material.

12. Automotive vehicle which includes a front part assembly as described in any of claims 1 to 11 whatsoever.

## Patentansprüche

1. Frontbaugruppe für Kraftfahrzeug, die umfasst:
- eine starre Frontseite (7) und beiderseits der Frontseite:
- einen Strukturfrontabschnitt (4),
- einen Kotflügelfrontabschnitt (5),
- einen flexiblen Träger (43), der von der Frontseite (7) transversal vorsteht und ein erstes Ende (43A), das an dem Frontseitenabschnitt (7) befestigt ist, und ein zweites Ende (43B), das mit dem Kotflügelfrontabschnitt (5) verbunden ist, besitzt, und
- einen optischen Block (21), der an dem Träger (43) befestigt ist,
**dadurch gekennzeichnet, dass** sie außerdem umfasst:
- ein Zentrierungs- und Führungsteil (71), das an dem Strukturfrontabschnitt (4) an einer Position befestigt ist, die bei der Montage längs einer ersten (Z), einer zweiten (Y) und einer dritten (X) Achse, die im Wesentlichen senkrecht sind, eingestellt werden kann,
- Mittel (83, 85) zum Befestigen und Zentrieren des zweiten Endes (43B) des Trägers an dem Teil (71) und
- Mittel (93, 95) zum Führen des Kotflügelfrontabschnitts (5) an dem Teil (71), um eine Gleitverbindung längs der dritten Achse (X) sicherzustellen,
so dass eine Verbindung mit Gleitmöglichkeit längs der dritten Achse (X) zwischen dem zweiten Ende (43B) des Trägers und dem Kotflügelfrontabschnitt (5) nach der Montage mittels des Zentrierungs- und Führungsteils (71) gewährleistet ist, um relative Einstellbewegungen zu ermöglichen und um Verformungen des Kotflügelfrontabschnitts (5) zu absorbieren.

2. Baugruppe nach Anspruch 1, **dadurch gekennzeichnet, dass** an dem Zentrierungs- und Führungsteil (71) einerseits ein Zentrierungsorgan (83), das mit einem mit dem zweiten Ende (43B) des Trägers fest verbundenen komplementären Zentrierungsorgan (85) zusammenwirkt, und andererseits ein Führungsorgan (93), das mit einem mit dem Kotflügelfrontabschnitt (5) fest verbundenen komplementären Führungsorgan (95) zusammenwirkt, ausgebildet sind.

3. Baugruppe nach Anspruch 2, **dadurch gekennzeichnet, dass** sie eine Zentrierungs- und Führungsvorrichtung (60) umfasst, die einerseits das Zentrierungs- und Führungsteil (71) und andererseits ein Unterstützungsteil (72), das an dem Strukturfrantabschnitt (4) an einer Position, die längs der zweiten Achse (Y) und der dritten Achse (X) einstellbar ist, befestigt ist und an dem das Zentrierungs- und Führungsteil (71) an einer Position befestigt ist, die bei der Montage längs der ersten Achse (Z) eingestellt werden kann, umfasst.

4. Baugruppe nach Anspruch 3, **dadurch gekennzeichnet, dass** das Unterstützungsteil (72) an dem Strukturfrontabschnitt (4) mittels einer Stellschraube befestigt ist, die in einem quadratischen Loch in Eingriff ist, das sich längs der zweiten Achse (Y) und der dritten Achse (X) erstreckt.

5. Baugruppe nach Anspruch 3 oder 4, **dadurch gekennzeichnet, dass** das Zentrierungs- und Führungsteil (71) an dem Unterstützungsteil (72) mittels einer Stellschraube befestigt ist, die in einem Langloch (112) in Eingriff ist, das sich längs der ersten Achse (Z) erstreckt,

6. Baugruppe nach einem der Ansprüche 2 bis 5, **dadurch gekennzeichnet, dass** das Führungsorgan (93) und das komplementäre Führungsorgan (95) mit komplementären Indexierungsformen (125, 127) versehen sind, die eine relative Sollposition des Kotflügelfrontabschnitts (5) und des zweiten Endes (43B) des Trägers definieren, ausgehend von der die Einstellbewegungen erfolgen.

7. Baugruppe nach einem der Ansprüche 2 bis 6, **dadurch gekennzeichnet, dass** das Zentrierungsorgan (83) und das komplementäre Zentrierungsorgan (85) kegelstumpfförmige, komplementäre Formen haben, die so vorgesehen sind, dass sie koaxial längs einer gemeinsamen Achse, die im Wesentlichen der dritten Achse (X) entspricht, ineinander gefügt werden können.

8. Baugruppe nach einem der Ansprüche 2 bis 7, **dadurch gekennzeichnet, dass** das Führungsorgan (93) eine Gleitschiene ist und das komplementäre Führungsorgan (95) eine Schiene ist, die von einer Kante (79) des Kotflügelfrontabschnitts (5) vorstehend ausgebildet ist.

9. Baugruppe nach Anspruch 8, **dadurch gekennzeichnet, dass** das komplementäre Führungsorgan (95) einteilig mit einem Kotflügelverstärkungsteil (77), das mit der Kotflügelkante (79) verbunden und daran starr befestigt ist, ausgebildet ist.

10. Baugruppe nach einem der Ansprüche 2 bis 9, **dadurch gekennzeichnet, dass** die dritte Achse (X) derart ist, dass sie im Wesentlichen der longitudinalen Richtung des Fahrzeugs entspricht, wenn die Baugruppe an dem Fahrzeug angebracht ist.

11. Baugruppe nach einem der Ansprüche 2 bis 10, **dadurch gekennzeichnet, dass** der Kotflügelfrontabschnitt (5) aus Kunststoff verwirklicht ist.

12. Kraftfahrzeug, das eine Frontabschnittbaugruppe nach einem der Ansprüche 1 bis 11, enthält.
